# EUROPÄISCHE PATENTANMELDUNG

(11) **EP 1 676 808 A2**
(43) Veröffentlichungstag der Anmeldung: **05.07.2006**
(21) Anmeldenummer: 05108047.1
(22) Anmeldetag: 02.09.2005
(51) Int. Cl.: B66F 9/07, B65G 1/04

(54) **Regalbediengerät und Hochregallager mit einem solchen Regalbediengerät**

(30) Priorität: 30.12.2004 DE 102004063588
(71) Anmelder: SIEMENS AKTIENGESELLSCHAFT, 80333 München (DE)
(72) Erfinder: Suess, Heiko, 60385 Frankfurt (DE)

(57) **Zusammenfassung**

Zur Erhöhung der Leistungsfähigkeit eines Regalbediengeräts (1), das einen an einer Vertikalführung (4) heb- und senkbaren Hubtisch (5) aufweist, wird vorgeschlagen, den Hubtisch mit einem Pufferspeicher (7) zu versehen, dessen Speicherplätze vertikal verfahrbar sind, sodass mehrere Ladungsträger (2a - 2d) gleichzeitig zum Zwecke der Ein- oder Auslagerung mit dem Regalbediengerät (1) transportierbar sind.

## Beschreibung

Die Erfindung betrifft ein Regalbediengerät mit den Merkmalen des Gattungsbegriffs des Anspruchs 1 sowie ein Hochregallager mit einem solchen Regalbediengerät.

Regalbediengeräte für die automatische Ein- und Auslagerung von Einheitsladungsträgern in ein bzw. aus einem Hochregallager gehören seit vielen Jahren zum Stand der Technik. Als Einheitsladungsträger mit fest vorgegebenen Abmessungen kommen beispielsweise Paletten, Tablare oder auch kastenförmige Behälter in Betracht. Letztere sind insbesondere in so genannten automatischen Kleinteilelagern üblich, um die, eine Vielzahl unterschiedlicher Abmessungen aufweisenden, zu lagernden Einzelteile aufzunehmen. Der jeweilige Ladungsträger mit den einzulagernden Waren wird vom Regalbediengerät an eine freie Lagerstelle im Lager verbracht und von diesem aufgrund entsprechender Anforderungen des Lagerverwaltungssystems an die elektronische Steuerung des Regalbediengeräts bei Bedarf wieder ausgelagert.

Beispielsweise aus der DE 91 03 198 U1 ist ein Regalbediengerät für ein Hochregal-Kleinteilelager bekannt. In diesem Hochregallager werden die Ladungsträger doppelttief eingelagert, d.h. dass an einer Lagerstelle hintereinander jeweils zwei Ladungsträger eingelagert werden können. Dieses Regalbediengerät weist ein Fahrwerk auf, mit dem es horizontal innerhalb einer Lagergasse des Hochregallagers an beliebige Stellen verfahren werden kann. Auf dem Fahrwerk ist als Vertikalführung ein Mast angeordnet, an dem ein Hubtisch vertikal verfahrbar ist. Der Hubtisch ist mit einer Transfereinheit versehen, mittels derer ein in einem Einlagerbereich aufgeladener Ladungsträger an die jeweils gewünschte Lagerstelle verbracht und dort in das Hochregallager eingelagert oder im umgekehrten Fall aus dieser Lagerstelle wieder ausgelagert und in einem Auslagerbereich nach außen abgegeben werden kann. Sämtliche Antriebe des Regalbediengeräts, d.h. die Antriebe zum Verfahren des Regalbediengeräts und seines Hubtisches in horizontaler und vertikaler Richtung sowie zur Betätigung der Transfereinheit werden von einer elektronischen Steuerung gesteuert. Um gegenüber einem Regalbediengerät, dass jeweils nur einen einzelnen Ladungsträger transportieren kann, das Leistungsvermögen des Regalbediengeräts zu erhöhen, also die Anzahl der in einem vorgegebenen Zeitraum ein- und auslagerbaren Ladungsträger deutlich zu steigern, ist der Hubtisch des aus der DE 91 03 198 U1 bekannten Regalbediengeräts nicht nur mit einem zentralen Transferabschnitt versehen, mit dessen Hilfe der eigentliche Ein- und Auslagervorgang durchführbar ist, sondern dieser zentrale Transferabschnitt ist auf der einen Seite von einem Auslagerungsabschnitt und auf der anderen Seite von einem Einlagerungsabschnitt flankiert. Im Einlagerungsabschnitt können entsprechen der Lagerung in den Lagerstellen des Hochregallagers jeweils zwei neu einzulagernde Ladungsträger untergebracht werden, während der Auslagerungsabschnitt zwei jeweils auszulagernde Ladungsträger aufnehmen kann. Weiterhin ist eine Umsetzvorrichtung auf dem Hubtisch vorgesehen, mit deren Hilfe auf dem Hubtisch je nach Bedarf Ladungsträger zwischen dem Einlagerungsabschnitt und dem zentralen Transferabschnitt oder zwischen dem zentralen Transferabschnitt und dem Auslagerungsabschnitt horizontal verschiebbar sind. Die Arbeitsweise dieses Regalbediengeräts ist so angelegt, dass jeweils zwei Ladungsträger auf den Einlagerungsabschnitt des Hubtischs geladen werden, anschließend das Regalbediengerät an den jeweils gewünschten freien Lagerplatz im Hochregallager verfahren wird und dann die Einlagerung nach Verschiebung der Ladungsträger in den zentralen Transferabschnitt vorgenommen wird. Es ist auch möglich, die Lagerstelle von zwei auszulagernden Ladungsträgern anzufahren, diese mit Hilfe des zentralen Transferabschnitts zu übernehmen und mit der Umsetzvorrichtung in den Auslagerungsabschnitt des Hubtischs zu verschieben, um danach die Einlagerung der beiden im Einlagerungsabschnitt mitgeführten Ladungsträger an dieser Lagerstelle vorzunehmen. Selbstverständlich kann dieses Gerät auch zur Ein- und Auslagerung lediglich einzelner Ladungsträger benutzt werden. Dabei ist es beispielsweise auch möglich, wenn lediglich ein hinterer Ladungsträger aus einer Lagerstelle ausgelagert werden soll, zunächst beide an dieser Lagerstelle lagernden Ladungsträger mit Hilfe des zentralen Transferabschnitts auf den Hubtisch zu übernehmen, lediglich den gewünschten Ladungsträger in den Auslagerungsabschnitt zu verschieben und den nicht benötigten Ladungsträger wieder einzulagern.

Zur Verkürzung der erforderlichen Ein- und Auslagerzeiten in einem Hochregallager ist es bekannt, das jeweils eingesetzte Regalbediengerät mit einem Hubtisch zu versehen, der mit mehreren parallelen Transfereinheiten ausgestattet ist, so dass entsprechend viele unmittelbar nebeneinander angeordnete Lagerstellen praktisch gleichzeitig hinsichtlich der Ein- oder Auslagerung bedient werden können. Beispiele hierfür sind die von der Siemens AG beziehbaren Regalbediengeräte des Typs AKL 100 in der Ausführung mit zwei Lastaufnahmemitteln (Transfereinheiten) oder des Typs AKL Multistore mit sogar drei nebeneinander auf dem Hubtisch angeordneten Lastaufnahmemitteln. Diese hochleistungsfähigen Regalbediengeräte erfordern jedoch für die zusätzlichen Transfereinheiten einen vergleichsweise hohen Bauaufwand und bringen ein nicht unerhebliches Zusatzgewicht mit sich.

Aufgabe der vorliegenden Erfindung ist es, ein gattungsgemäßes Regalbediengerät mit möglichst geringem Bauaufwand in seiner Leistungsfähigkeit hinsichtlich einer schnellen Ein- und Auslagerung wesentlich zu verbessern und ein Hochregallager mit einem solchen Regalbediengerät vorzuschlagen.

Gelöst wird diese Aufgabe hinsichtlich des Regalbediengeräts durch die Merkmale des kennzeichnenden Teils des Patentanspruchs 1. Vorteilhafte Weiterbildungen dieses Regalbdiengeräts, die in beliebiger Weise miteinander kombinierbar sind, sind in den Ansprüchen 2 - 12 niedergelegt.

Ein erfindungsgemäßes Hochregallager weist die im unabhängigen Anspruch 13 angegebenen Merkmale auf und ist durch die Merkmale der Ansprüche 14 - 16 in vorteilhafter Weise weiter ausgestaltbar.

Ausgehend von einem gattungsgemäßen Regalbediengerät mit einem eine einzige Transfereinheit aufweisenden Hubtisch sieht die vorliegende Erfindung vor, dass der Hubtisch für den Transport von Ladungsträgern zwischen dem Einlagerbereich, der Lagerstelle und dem Auslagerbereich des Hochregallagers mit einem Pufferspeicher versehen ist, in dem zusätzlich zur Aufnahme eines Ladungsträgern im Bereich der Transfereinheit mindestens ein weiterer Ladungsträger aufnehmbar ist. Der Pufferspeicher sollte zweckmäßigerweise mindestens zwei, vorzugsweise drei, Speicherplätze für Ladungsträger aufweisen. Als Speicherplatz ist im Rahmen der vorliegenden Erfindung eine Zwischenlagerstelle am Hubtisch zu verstehen, die in ihren Ausmaßen einem Lagerplatz im Hochregallager entspricht. Im Falle einer beispielsweise doppelttiefen Lagerung von Ladungsträgern ist ein Speicherplatz also für die Aufnahme von entsprechend zwei hintereinander angeordneten Ladungsträgern ausgelegt. Zur Vereinfachung der Darstellung wird in der vorliegenden Anmeldung lediglich der Fall geschildert, dass ein Speicherplatz regelmäßig von nur einem einzelnen Ladungsträger belegt wird. Es versteht sich aber von selbst, dass die vorliegende Erfindung in gleicher Weise auch mit Ladungsträgern ausführbar ist, die tatsächlich aus mehreren Untereinheiten (z.B. Ladungsbehälter) bestehen und beispielsweise als Ladungsträgerdoppel (zweifachtiefe Lagerung) oder Ladungsträgertripel (dreifachtiefe Lagerung) usw. ausgebildet sind.

Der Pufferspeicher im Rahmen der vorliegenden Erfindung ist derart ausgebildet, dass zum Einlagern in das Hochregallager der mindestens eine zusätzliche Ladungsträger in den Arbeitsbereich der Transfereinheit und umgekehrt zum Auslagern aus dem Arbeitsbereich der Transfereinheit in den Pufferspeicher überführbar ist.

Vorzugsweise sind die Speicherplätze im Pufferspeicher übereinander angeordnet. Hierdurch kann das seitliche Anfahrmaß des Regalbediengeräts im Vergleich zu einem Regelbediengerät mit mehreren nebeneinander angeordneten Lastaufnahmemitteln erheblich kleiner gehalten werden, da es sich gegenüber der bekannten Bauweise mit einem einzigen Lastaufnahmemittel praktisch nicht vergrößert.

Zweckmäßigerweise sind die Speicherplätze des Pufferspeichers heb- und senkbar, wobei das Heben und Senken aller Speicherplätze vorzugsweise gekoppelt durchführbar ist, das heißt, für alle Speicherplätze gleichzeitig erfolgt. Dies lässt sich besonders einfach erreichen, wenn der Pufferspeicher als Lifteinrichtung ausgebildet ist, deren Arbeitsbereich über der Transfereinheit des Hubtischs angeordnet ist. Eine solche Lifteinrichtung kann mit geringem Bauaufwand und somit mit vergleichsweise geringen Herstellkosten aus vertikal umlaufenden Bändern oder Ketten gebildet werden, die im Abstand zueinander sich gegenüberliegend angeordnet werden und die mit Halteeinrichtungen für die Ladungsträger versehen sind. Solche Halteeinrichtungen können als einfache Winkelauflagen ausgebildet sein. Die verwendeten Ladungsträger können dann z.B. mit ihrem Boden auf die Winkelauflagen aufgesetzt werden oder verfügen beispielsweise über einen seitlich angeordneten Haltekragen, mit dem sie sich auf den Winkelauflagen abstützen können. Insbesondere für den Auslagerungsvorgang ist es zweckmäßig, wenn die Transfereinheit des Hubtischs mit einer Koppeleinrichtung zum kraft- oder formschlüssigen Ankoppeln an einen Ladungsträger versehen ist, sodass dieser aus der Lagerstelle des Hochregallagers herausgezogen werden kann. Für das Einlagern ist vielfach ein einfaches Herausschieben durch die Transfereinheit ausreichend. Die Koppeleinrichtung der Transfereinrichtung kann zweckmäßig beispielsweise als Backen- und/oder Sauggreifer ausgebildet sein. Die Koppeleinrichtung kann aber auch mit einem oder mehreren Greiffingern zur formschlüssigen Verbindung mit dem ein- oder auszulagernden Ladungsträger versehen sein. Vielfach ist es ausreichend, die Koppeleinrichtung als in Richtung der Lagerstellen des Hochregallagers verfahrbaren angetriebenen Förderer auszubilden, auf dem der ein- oder auszulagernde Ladungsträger aufliegt und an der Lagerstelle des Hochregallagers abgesetzt werden kann. Zum Aufnehmen eines gelagerten Ladungsträgers kann der angetriebene Förderer ausgefahren (teleskopiert) werden, bis er den Ladungsträger vollständig unterfahren hat. Anschließend wird er leicht angehoben, um den Ladungsträger aufzunehmen, und dann auf den Hubtisch zurückgefahren. Beim Einlagern läuft dieser Vorgang in umgekehrter Reihenfolge ab. Als angetriebene Förderer kommen insbesondere Bandförderer aber auch Rollen- oder Kettenförderer oder sonstige Förderer in Betracht. Als Backengreifer können beispielsweise auch horizontal umlaufende Raupenbänder eingesetzt werden. Grundsätzlich sind beliebige Transfereinheiten bzw. Koppeleinrichtungen im Rahmen der Erfindung einsetzbar.

Ein erfindungsgemäßes Hochregallager hat mindestens eine Lagergasse, die an ihren beiden Längsseiten jeweils Lagerstellen für Einheitsladungsträger aufweist. Es verfügt über einen Einlagerbereich für die Übergabe von neu einzulagernden Ladungsträgern und einen Auslagerbereich für die Übergabe von ausgelagerten Ladungsträgern und ist mit mindestens einem wie vorstehend beschriebenen Regalbediengerät versehen, das die Ladungsträger zwischen dem Einlagerbereich, dem jeweiligen Lagerplatz im Hochregellager und dem Auslagerbereich befördert. Vorzugsweise ist im Einlagerbereich und/oder im Auslagerbereich, die zweckmäßigerweise eine funktionale Einheit bilden, also an der gleichen Stelle angeordnet sein können, eine automatische Be- bzw. Entladeeinrichtung vorgesehen, um insbesondere die gleichzeitige Be- bzw. Entladung der Speicherplätze des Pufferspeichers vornehmen zu können. Diese Be- oder Entladeeinrichtung ist zweckmäßig als einfacher Pusher ausgebildet, der Ladungsträger auf die Speicherplätze bzw. von diesen herunter schiebt.

Das erfindungsgemäße Regalbediengerät weist gegenüber einem herkömmlichen Regalbediengerät mit einer einzelnen Transfereinheit auf dem Hubtisch eine erheblich höhere Kapazität auf. Bei einem Regalbediengerät mit einem Pufferspeicher, der über drei Speicherplätze verfügt, so dass einschließlich des Platzes im Arbeitsbereich der Transfereinheit selbst insgesamt vier Ladungsträger gleichzeitig transportierbar sind, kann z.B. in einem Kleinteilelager von etwa 30m Länge und üblichen Fahrgeschwindigkeiten mit einer Steigerung des Leistungsvermögens um etwa 70% gerechnet werden. Gegenüber einem Regalbediengerät mit mehreren Lastaufnahmemitteln am Hubtisch liegen die Kosten erheblich niedriger, da ein Pufferspeicher in Form einer Lifteinrichtung mit vertikal umlaufenden Bändern als Standardbaugruppe preisgünstig zur Verfügung steht. Darüber hinaus ist der Gewichtszuwachs durch den Pufferspeicher vergleichsweise gering.

Nachfolgend wird die vorliegende Erfindung, die sich in besonderer Weise für automatische Kleinteilelager eignet, anhand des in der Zeichnung in lediglich schematisierter Form dargestellten Ausführungsbeispiels näher erläutert.

Es zeigen:
- Figur 1: ein erfindungsgemäßes Regalbediengerät in Seiten-und Stirnansicht,
- Figur 2: das Regalbediengerät aus Figur 1 in Stirnansicht im Ein- und Auslagerbereich eines nicht näher dargestellten Hochregallagers,
- Figur 3: eine schematisierte Darstellung eines Pufferspeichers und
- Figur 4: den Verfahrweg eines Regalbediengeräts entlang einer Lagergasse eines Hochregallagers über vier Einlager- und vier Auslagerpunkte.

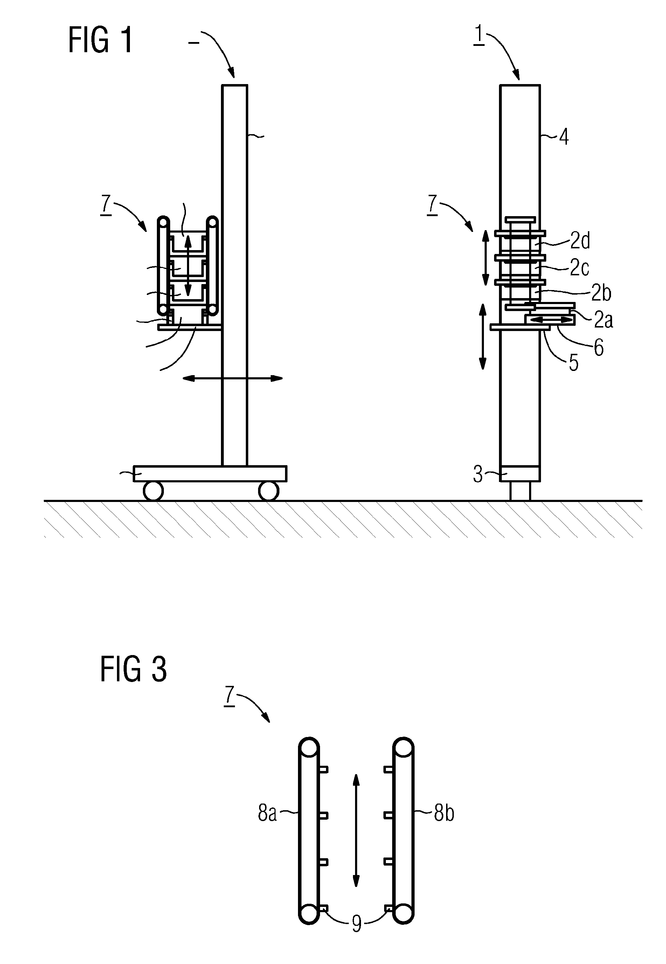

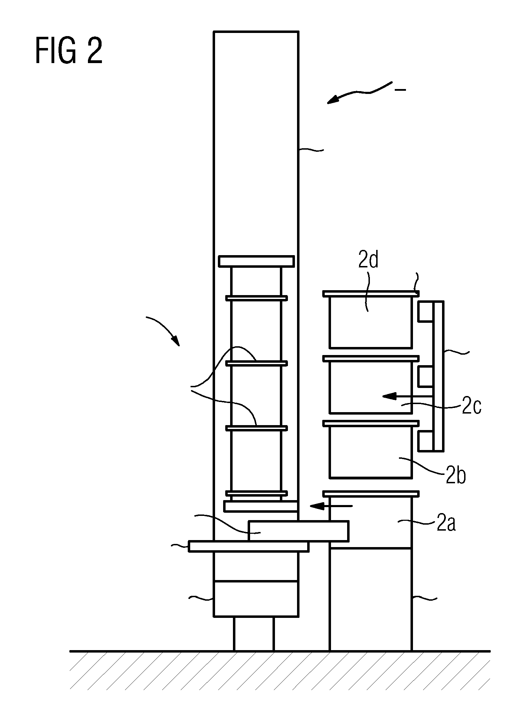

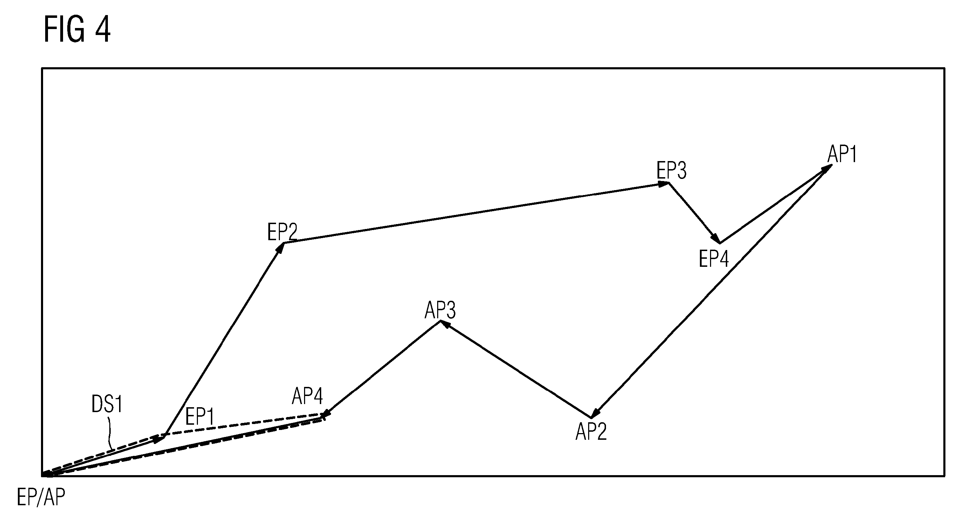

Das in Figur 1 in zwei Ansichten in lediglich schematisierter Form wiedergegebene Regalbediengerät 1 weist ein Fahrwerk 3 auf, mit dessen Hilfe es in einer nicht näher dargestellten Lagergasse eines Hochregallagers horizontal verfahrbar ist. Auf dem Fahrwerk 3 ist in Form eines vertikalen Mastes eine Vertikalführung 4 für einen Hubtisch 5 vorgesehen, der wie durch den Doppelpfeil im rechten Teil der Figur 1 dargestellt ist, heb- und senkbar ist. Mit dem Hubtisch 5 ist ein Pufferspeicher 7 fest verbunden, der übereinander mehrere Speicherplätze für Ladungsträger 2 aufweist. Wie durch den vertikalen Doppelpfeil im linken und rechten Teil der Figur 1 angedeutet ist, sind die Speicherplätze des Pufferspeichers relativ zum Hubtisch nach oben und unten verfahrbar. Der Aufbau des Pufferspeichers 7 ist in Figur 3 in schematisierter Form näher dargestellt. Der Pufferspeicher 7 weist als wesentliche Bauelemente zwei vertikal umlaufende Bänder 8a, 8b auf, die sich parallel im Abstand gegenüberliegen. Die Bänder 8a, 8b sind reversierbar anzutreiben. Ein wesentliches Kennzeichen der Bänder 8a, 8b sind mehrere, vorzugsweise im gleichen Abstand zueinander angeordnete Winkelauflagen 9, die horizontal verlaufen. Beim Antreiben der Bänder 8a, 8b werden diese Winkelauflagen 9 somit je nach Antriebsrichtung nach oben oder unten bewegt. Ein Ladungsträger 2, der auf entsprechenden Winkelauflagen der beiden Bänder 8a, 8b ruht, wird somit bei Bewegung der Bänder nach oben oder unten zwangsläufig mitgenommen. In Figur 1 sind mehrere Ladungsträger 2a bis 2d in Form von Lagerkästen zu erkennen, die z. B. an ihrem oberen Rand einen umlaufenden Haltekragen 12 (Figur 2) aufweisen, mit dem sie auf den Winkelauflagen 9 aufliegen können (hängende Lagerung). In Figur 1 sind die drei Ladungsträger 2b, 2c und 2d jeweils in einem Speicherplatz des Pufferspeichers 7 aufgenommen. Der Ladungsträger 2a wird gerade von der mit einem Backengreifer versehenen Transfereinheit 6 des Hubtischs 5 auf den Hubtisch 5 gezogen (Auslagerung aus einem Speicherplatz des Hochregallagers) oder (Einlagerung in einen freien Speicherplatz des Hochregallagers) von dem Hubtisch 5 abgeschoben. Das Hochregallager selbst ist in Figur 1 nicht näher dargestellt.

In Figur 2 ist der Einlagerbereich eines ebenfalls nicht näher dargestellten Hochregallagers wiedergegeben. Dieser Einlagerbereich kann bei entsprechend umgekehrten Funktionalitäten auch gleichzeitig als Auslagerbereich genutzt werden. Dargestellt ist die Übernahme von vier Ladungsträgern 2a bis 2d auf den Hubtisch 5 des Regalbediengeräts 1. Der untere Ladungsträger 2a ruht unmittelbar auf einem schematisch angedeuteten Förderer 11, der der Zuführung von Ladungsträgern 2 zum Hochregallager dient, und befindet sich in entsprechender Höhe wie der Hubtisch 5. Daher lässt sich der Ladungsträger 2a mittels des Backengreifers der Transfereinheit 6 erfassen und unmittelbar auf den Hubtisch 5 ziehen. Die weiteren Ladungsträger 2b, 2c und 2d sind oberhalb des Ladungsträgers 2a angeordnet und ruhen auf nicht dargestellten Tragelementen des Einlagerungsbereichs des Hochregallagers. Sie sind in einer solchen Höhenposition angeordnet, dass ihre Haltekragen 12 geringfügig oberhalb der jeweils zugeordneten Winkelauflage 9 des Pufferspeichers 7 liegen. Mittels eines Pushers 10 können entsprechend dem eingezeichneten Pfeil die drei Ladungsträger 2b, 2c, 2d zusammen in Richtung des Pufferspeichers 7 verschoben werden, bis die Haltekragen 12 auf den Winkelauflagen 9 aufliegen. Danach können alle vier Ladungsträger 2a bis 2d gleichzeitig in einem einzigen Transportvorgang von dem Regalbediengerät 1 mitgenommen werden. In entsprechender Weise läuft umgekehrt die Auslagerung ab, das heißt, dass die herantransportierten Ladungsträger 2 von einem nicht dargestellten zweiten Pusher nach rechts aus dem Pufferspeicher 7 ausgeschoben werden können, um sie nach außen abzugeben. Der unterste Ladungsträger 2a wird mittels der Transfereinheit 6 abgegeben. Selbstverständlich wäre es auch möglich, den Entladevorgang zur linken Seite des Regalbediengeräts 1 vorzunehmen, sodass hierzu auch der Pusher 10 eingesetzt werden könnte. Dann müssten aber selbstverständlich entsprechende Aufnahmeeinrichtungen für den Abtransport der ausgelagerten Ladungsträger 2 auf dieser linken Seite vorgesehen werden.

Wenn nun das beladene Regalbediengerät 1 die Lagerstelle erreicht hat, an der der erste Ladungsträger 2 a abgegeben werden soll, erfolgt die Übergabe an den jeweiligen Lagerplatz des Hochregallagers mittels der Transfereinheit 6. Nach Einlagerung des Ladungsträgers 2a wird der nächste Einlagerungsplatz (Einlagerungspunkt) im Hochregallager angefahren, an dem der Ladungsträger 2b abgegeben werden soll. Während der Fahrt wird der Pufferspeicher 7 hierzu um eine Position nach unten verfahren, sodass der Ladungsträger 2b unmittelbar in den Arbeitsbereich der Transfereinheit 6 gelangt. Er kann dann in entsprechender Weise wie der Ladungsträger 2a eingelagert werden. In gleicher Weise wird danach mit den beiden Ladungsträgern 2c und 2d verfahren. Nach vollständiger Entladung kann das Regalbediengerät 1 anschließend nacheinander vier Lagerstellen (Auslagerungspunkte) des Hochregallagers anfahren, um von dort auszulagernde Ladungsträger aufzunehmen. Die Auslagerung erfolgt dabei in entsprechender Weise mit umgekehrtem Bewegungsablauf. Sobald ein Ladungsträger 2 von der Transfereinheit 6 auf den Hubtisch 5 übernommen worden ist, wird er durch Verfahren der umlaufenden Bänder 8a, 8b des Pufferspeichers 7 um eine Position nach oben verfahren, sodass der Platz im Arbeitsbereich der Transfereinheit 6 wieder frei wird für die Aufnahme des nächsten auszulagernden Ladungsträgers, mit dem entsprechend verfahren wird. Danach können noch zwei weitere Auslagerungspunkte angefahren werden, um von dort weitere Ladungsträger zu übernehmen. Das voll beladene Regalbediengerät 1 wird dann zum Auslagerbereich des Hochregallagers verfahren, um in der vorstehend bereits beschriebenen Weise die aufgenommenen Ladungsträger abzugeben. Selbstverständlich ist es möglich, einen Einlagerungszyklus oder auch einen Auslagerungszyklus bei Bedarf mit lediglich teilbeladenem Regalbediengerät 1 auszuführen.

Die Leistungsfähigkeit des erfindungsgemäß ausgebildeten Regalbediengeräts wird aus dem in Figur 4 schematisch dargestellten Ein- und Auslagerungszyklus in einem Hochregallager verdeutlicht. Die Lagerstellen des Hochregallagers, die im Einzelnen nicht dargestellt sind, liegen innerhalb des gezeichneten Rechtecks. Der kombinierte Ein- und Auslagerungsbereich ist mit EP/AP bezeichnet. In Form von Pfeilen sind die Verfahrwege des Hubtischs 5 des Regalbediengeräts 1 schematisch angedeutet, mit denen vier Einlagerungspunkte EP1 bis EP4 sowie vier Auslagerungspunkte AP1 bis AP4 erreicht werden sollen, um dort Ladungsträger 2 ein- bzw. auszulagern. Bei einem herkömmlichen Regalbediengerät mit lediglich einem einzelnen Lastaufnahmemittel und ohne Pufferspeicher wären hierzu vier so genannte Lagerdoppelspiele notwendig. Eines dieser Lagerdoppelspiele DS1 ist durch die gestrichelten Zusatzlinien angedeutet. Es sieht zunächst die Einlagerung eines Ladungsträgers am Punkt EP1 vor, anschließend die Weiterfahrt zum Auslagerungspunkt AP4, um dort einen Ladungsträger auszulagern, und anschließend die Rückfahrt zum Ein-/Auslagerungsbereich EP/AP zur Abgabe des ausgelagerten Ladungsträgers. Im nächsten Doppelspiel könnten die beiden Punkte EP2 und AP3 angefahren werden, in einem weiteren Doppelspiel die Punkte EP3 und AP2 und schließlich im vierten Doppelspiel die Punkte EP4 und AP1. Bei einer Entfernung des am weitesten vom Ein-/Auslagerungsbereich EP/AP abgelegenen Punktes AP1 von zum Beispiel 28,5 Metern in horizontaler Richtung würden diese vier Doppelspiele bei einem bekannten Regalbediengerät einen Zeitbedarf von etwa 108 Sekunden erfordern, was einer Kapazität von 133 Doppelspielen pro Stunde entspricht. Mit dem erfindungsgemäßen Regalbediengerät 1 würde die Ein- und Auslagerung jedoch entsprechend dem Verlauf der eingezeichneten Pfeile zunächst über die Einlagerungspunkte EP1 bis EP4 und anschließend über die Auslagerungspunkte AP1 bis AP4 und zurück zum Ein-/Auslagerungsbereich EP/AP erfolgen. Durch die hierbei erreichte drastische Wegereduzierung infolge der Einsparung wesentlicher Teile von Hin- und Rückwegen würde sich unter Zugrundelegung unveränderter Geschwindigkeitsdaten des Regalbediengeräts 1 ein Zeitbedarf von knapp 62 Sekunden ergeben. Umgerechnet auf die Zahl entsprechender "klassischer" Lagerdoppelspiele bedeutet dies eine fiktive Steigerung der Leistungsfähigkeit des Regalbediengeräts 1 auf 233 Doppelspiele pro Stunde.

## Patentansprüche

1. Regalbediengerät (1) zum Ein- und Auslagern von Einheitsladungsträgern (2a - 2d) in ein bzw. aus einem Hochregallager,
mit einem Fahrwerk (3) zur horizontalen Bewegung innerhalb einer Lagergasse des Hochregallagers,
mit einem an einer Vertikalführung (4) verfahrbaren Hubtisch (5), der mit einer einzigen Transfereinheit (6) zum Ein- und Auslagern eines Ladungsträgers (2a - 2d) in eine bzw. aus einer Lagerstelle des Hochregallagers versehen ist,
und mit einer die Antriebe des Regalbediengeräts steuernden elektronischen Steuerung,
**dadurch gekennzeichnet, dass**
der Hubtisch (5) für den Transport von Ladungsträgern (2) zwischen Einlagerbereich (EP), Lagerstelle und Auslagerbereich (AP) des Hochregallagers mit einem Pufferspeicher (7) zur Aufnahme mindestens eines (2b - 2d) zusätzlich zu einem im Bereich der Transfereinheit (6) aufnehmbaren Ladungsträgers (2a) versehen ist,
wobei der Pufferspeicher (7) derart ausgebildet ist, dass zum Einlagern in das Hochregallager der mindestens eine zusätzliche Ladungsträger (2b - 2d) in den Arbeitsbereich der Transfereinheit (6) und umgekehrt zum Auslagern aus dem Arbeitsbereich der Transfereinheit (6) in den Pufferspeicher (7) überführbar ist.

2. Regalbediengerät nach Anspruch 1,
**dadurch gekennzeichnet, dass**
der Pufferspeicher (7) mindestens zwei, insbesondere drei Speicherplätze für Ladungsträger (2) aufweist.

3. Regalbediengerät nach einem der Ansprüche 1 bis 2,
**dadurch gekennzeichnet, dass**
die Speicherplätze übereinander angeordnet sind.

4. Regalbediengerät nach Anspruch 3,
**dadurch gekennzeichnet, dass**
die Speicherplätze heb- und senkbar sind.

5. Regalbediengerät nach Anspruch 4,
**dadurch gekennzeichnet, dass**
das Heben und Senken aller Speicherplätze jeweils gekoppelt durchführbar ist.

6. Regalbediengerät nach einem der Ansprüche 3 bis 5,
**dadurch gekennzeichnet, dass**
der Pufferspeicher (7) als Lifteinrichtung ausgebildet ist, deren Arbeitsbereich über der Transfereinheit (6) angeordnet ist.

7. Regalbediengerät nach Anspruch 6,
**dadurch gekennzeichnet, dass**
die Lifteinrichtung aus einander im Abstand gegenüberliegenden, vertikal umlaufenden Bändern (8a, 8b) oder Ketten gebildet ist, die mit Halteeinrichtungen für die Ladungsträger (2) versehen sind.

8. Regalbediengerät nach Anspruch 7,
**dadurch gekennzeichnet, dass**
die Halteeinrichtungen als Winkelauflagen (9) ausgebildet sind.

9. Regalbediengerät nach einem der Ansprüche 1 bis 8,
**dadurch gekennzeichnet, dass**
die Transfereinheit (6) mit einer Koppeleinrichtung zum kraft- oder formschlüssigen Ankoppeln an einen Ladungsträger (2) versehen ist.

10. Regalbediengerät nach Anspruch 9,
**dadurch gekennzeichnet, dass**
die Koppeleinrichtung der Transfereinheit (6) als Backen- und/oder Sauggreifer ausgebildet ist.

11. Regalbediengerät nach Anspruch 9,
**dadurch gekennzeichnet, dass**
die Koppeleinrichtung als in Richtung der Lagerstellen des Hochregallagers verfahrbarer angetriebener Förderer ausgebildet ist, auf dem der ein- oder auszulagernde Ladungsträger (2) aufliegt.

12. Regalbediengerät nach Anspruch 9,
**dadurch gekennzeichnet, dass**
die Koppeleinrichtung mit mindestens einem Greiffinger zur formschlüssigen Verbindung mit dem ein- oder auszulagernden Ladungsträger (2) versehen ist.

13. Hochregallager
mit mindestens einer Lagergasse mit beidseitig angeordneten Lagerstellen für Einheitsladungsträger (2), mit mindestens einem Regalbediengerät (1),
mit einem Einlagerbereich (EP) für die Übergabe von neu einzulagernden Ladungsträgern (2) an das Regalbediengerät (1) und
mit einem Auslagerbereich (AP) für die Übergabe der von dem Regalbediengerät (1) ausgelagerten Ladungsträger (2),
**dadurch gekennzeichnet, dass**
das mindestens eine Regalbediengerät (1) ausgebildet ist nach einem der Ansprüche 1 bis 12.

14. Hochregallager nach Anspruch 13,
**dadurch gekennzeichnet, dass**
im Einlager- (EP) und/oder Auslagerbereich (AP) eine automatische Be- bzw. Entladeeinrichtung (10) vorgesehen ist für die, insbesondere gleichzeitige, Be- bzw. Entladung der Speicherplätze des Pufferspeichers (7).

15. Hochregallager nach Anspruch 14,
**dadurch gekennzeichnet, dass**
die Be- oder die Entladeeinrichtung (10) jeweils als Pusher ausgebildet ist.

16. Hochregallager nach einem der Ansprüche 13 bis 15,
**dadurch gekennzeichnet, dass**
der Einlagerbereich (EP) mit dem Auslagerbereich (AP) eine gemeinsame Funktionseinheit bildet.
